# EUROPEAN PATENT APPLICATION

(11) **EP 3 075 526 A1**
(43) Date of publication of application: **05.10.2016**
(21) Application number: 15162253.7
(22) Date of filing: 01.04.2015
(51) Int. Cl.: B29D 11/00

(54) **METHOD OF MANUFACTURING A PHOTOCHROMIC LENS**

(71) Applicant: Carl Zeiss Vision Italia S.p.A., 21043 Varese (IT)
(72) Inventor: Padovani, Roberto, 21046 Malnate (VA) (IT); Semeraro, Filippo, 21020 Mornago (IT)
(74) Representative: Carl Zeiss AG - Patentabteilung

(57) **Abstract**

The invention refers to a method of manufacturing a photochromic lens comprising the steps:
- providing a solution of a photochromic dye, and
- dipping at least a portion of the lens into the solution for a prescribed time interval.

## Description

The present invention relates to a method of manufacturing a photochromic lens.

A photochromic lens in the meaning of the present invention can have an optical power for correcting the viewing capabilities of a person wearing such lenses, such as for correcting glasses, but also can be void of particular correcting capabilities such as for sun glasses or goggles usually having plane surfaces.

Current photochromic products available in the market for piano lenses and goggles are mostly produced using coating. A quite usual coating process is the so called spin-coating process in which some photochromic dye is provided on the surface of the lens while the lens is rotated. This production process can only produce photochromic lenses or goggles which get activated on the whole surface because the photochromic layer covers the whole surface.

Another possible manufacturing process for producing photochromic lenses is by casting, where photochromic dyes are added to the bulk material of the lens. Like the coating solution, also photochromic lenses produced by casting can only become activated over the whole surface of the lens. Moreover, casting only is broadly used for lenses having curved surfaces but not for goggles using glasses with plane surfaces.

Producing injected lenses or goggles with photochromic dyes is quite challenging as usually these photochromic dyestuffs cannot bear high temperatures above about 200° C which are used during injection processes. Also, in this case lenses will be activated on the whole surface.

It also has been proposed to use a dip coating process for tinting lenses.

An object of the present disclosure is to provide a manufacturing method for a photochromic lens which also is suitable for providing a photochromic tinting onto a portion of the lens area. This object is solved by a method with the features of claim 1. Advantageous embodiments are disclosed by the dependent claims.

Another object of the present invention is to provide a lens which only comprises a photochromic behavior on a first portion of the lens area and no photochromic capabilities in a second portion of the lens area which is different from the first portion. This object is solved by a lens with the features of claims 12 or 13.

An embodiment of a method of manufacturing a photochromic lens comprising the steps of
- providing a solution of a photochromic dye, and
- dipping at least a portion of the lens into the solution for a prescribed time interval.

The photochromic dye can be any suitable and known photochromic dyestuff.

According to an embodiment, the solution into which the lens is dipped comprises water as a solvent.

According to an embodiment, the tinting bath is kept at a temperature between 20°C and 98°C, more preferably between 40 °C and 95°C, during the dipping of the lens. The temperature of the tinting bath can be selected and adjusted according to the material of the lens to be tinted. For polycarbonate lenses the temperature of the tinting bath is selected higher than for polyamide lenses. Preferably for polyamide lenses the temperature of the tinting bath is adjusted in the range between 40 and 70 °C, while for polycarbonate lenses the temperature is adjusted within the range between 60°C and 98°C.

According to an embodiment the prescribed time is in the range between 10 minutes and 15 hours, more preferable in the range between 30 minutes and 6 hours..

According to an embodiment the method can comprise a further step of applying a hard coating to the lens surfaces after the photochromic tinting has been applied to the lens by dipping as described above.

To prepare the solution of the dye, a solid photochromic dyestuff can first become dissolved in an alcohol. The alcohol can be any suitable alcohol and especially can be benzyl alcohol. In an embodiment, a further step of adding a surfactant material to the dyestuff dissolved in the alcohol is provided.

In one embodiment, the dipping step comprises to dip only a portion of the lens into the solution. In this manner a lens is manufactured which comprises the photochromic properties only on a portion of its area while another portion remains untinted and, accordingly, does not comprise a photochromic behavior.

In one embodiment, the method further comprises providing a relative movement between the lens and the solution. By this step a gradient effect of the photochromic behavior is created. In some areas a stronger photochromic behavior is provided than in other areas with a continuous and steady change of the photochromic behavior between both such areas.

The lens material can be a plastic material, especially the lens material can be a polyamide or a polycarbonate.

It is noted that the process according to the present invention does not require to coat a lens with a coating which can be tinted and afterwards to tint such coating. Instead with the method according to the invention the lens material is directly tinted without any coating step before the tinting, and the tint diffuses, at least in part, into the lens material. The result then is a lens with some photochromic tint diffused into the lens material and some photochromic tint bonded to the surface of the lens.

Another embodiment provides a photochromic lens comprising photochromic properties only on a portion of the lens area. Such a lens especially can be manufactured by a method as described above.

In order to produce photochromic lenses which can get activated only on a portion of the lens, like for example gradient lenses, a new production process by dipping has been developed. A tinting bath like the ones used for tinting lenses with regular dyestuff, but using a photochromic dyestuff instead and a specific chemical recipe is prepared. Lenses are fully or partially immerged in the tinting bath and a relative movement of the lens or goggle with the tinting solution level can cause a gradient effect. Lenses or goggles can be put on rods in order to tint more lenses or goggles at the same time.

In a first step the photochromic dyes are dissolved in an alcohol such as in benzyl alcohol or similar solvent materials. The percentage of the dye in the alcohol can vary from 0,1% to 10%.

Into the mixture of the dyestuff with benzyl alcohol some surfactant material, like detergents can be added to facilitate the mixing of the solution. Surfactants can be added in a quantity from 0.5 to 2 times the amount of alcohol.

In a second step, once the solution comprising dyestuff, alcohol and a surfactant is mixed in order to become homogenous, the mixture is added to a tinting bath full of water. The amount of solution comprising the mixture of dyestuff, alcohol and surfactant can vary from 10 ml per liter water to 200 ml per liter water.

The tinting bath temperature can vary from 20° to 98°, while the best temperature for processing is about 60° for polyamide lenses or goggles and 95° for polycarbonate lenses.

Lenses or goggles are usually tinted for about 2 hours, but the tinting time can vary from 10 minutes to 15 hours according to the level of desired photochromic behavior.

Lenses or goggles can be tinted without relative movement of tinting solution and lenses to achieve a constant tinting of the lens dipped into the tinting solution. In this manner lenses with a constant photochromic capability are created. Alternatively it is possible to create a gradient effect with a relative movement of tinting solution and lenses. In this case, only the tinted part of the lens or goggle will be activated once exposed to the activating wavelengths specific to the dyestuff used (typically sunlight).

After the photochromic effect has been applied by the process as described, hard coatings can be applied onto the lens surfaces.

By the above described process it is important to dissolve dyestuff into a solvent solution and to be able to create a homogeneous mixture of the solvent solution with water.

By the above described dipping process, photochromic lenses or goggles can be created with the possibility to define the intensity of the photochromic behavior and the degree within which the lens can activated by sunlight by changing immersion time.

As a suitable dyestuff for example the material sold by Vivimed Labs Ltd. under the name Reversacol Palatinate Purple can be used for the above described process.

## Claims

1. Method of manufacturing a photochromic lens comprising the steps:
- providing a solution of a photochromic dye, and
- dipping at least a portion of the lens into the solution for a prescribed time interval.

2. The method of claim 1, wherein the solution comprises water as a solvent.

3. The method of claim 1 or 2, wherein he tinting bath is kept at a temperature between 20°C and 98°C.

4. The method of one of claims 1 - 3, wherein the prescribed time is in the range between 10 minutes and 15 hours.

5. The method of one of claims 1 - 4, further comprising a step of a applying a hard coating to a surface of the lens.

6. The method of one of the claims 1 - 5, further comprising a step of dissolving a solid dye in an alcohol.

7. The method of claim 6, further comprising a step of adding a surfactant material.

8. The method of one of claims 1-7, wherein the dipping step comprises to dip only a portion of the lens into the solution.

9. The method of claim 8, further comprising providing a relative movement between the lens and the solution.

10. The method of one of claims 1 - 9, wherein the lens material is a plastic material.

11. The method of claim 10, wherein the lens material is a polyamide or a polycarbonate.

12. A photochromic lens comprising a photochromic layer only on a portion of its surfaces.

13. A photochromic lens according to claim 12, manufactured according to a method according to one of claims 1 - 11.
